# EUROPEAN PATENT APPLICATION

(11) **EP 4 496 398 A1**
(43) Date of publication of application: **22.01.2025**
(21) Application number: 23851189.3
(22) Date of filing: 20.02.2023
(51) Int. Cl.: H04W 68/00

(54) **INFORMATION RECEIVING METHOD AND APPARATUS, INFORMATION TRANSMITTING METHOD AND APPARATUS, AND STORAGE MEDIUM**

(30) Priority: 08.08.2022 CN 202210946673
(71) Applicant: ZTE Corporation, Shenzhen, Guangdong 518057 (CN)
(72) Inventor: XU, Hui, Shenzhen, Guangdong 518057 (CN); LU, Chen, Shenzhen, Guangdong 518057 (CN); GUAN, Mingxiang, Shenzhen, Guangdong 518057 (CN)
(74) Representative: Brunazzi, Stefano
(86) International application number: PCT/CN2023/077248
(87) International publication number: WO 2024/031953

(57) **Abstract**

Provided are an information receiving method and apparatus, an information transmitting method and apparatus, and a storage medium. The information receiving method includes: A UE in a RRC_UNCONNECTED state receives sub-grouping configuration information and PEI configuration information by means of a system broadcast message, wherein a UE that has joined a MBS session does not detect a PEl, and detects a paging message at a paging occasion; and a UE that has not joined the MBS session detects a PEI at a PEl occasion according to the sub-grouping configuration information and the PEI configuration information; and if the PEI indicates that a paging message of sub-grouping to which the UE belongs exists, the UE detects the paging message at the paging occasion.

## Description

### Technical Field

Embodiments of the present disclosure relates to the field of communications, and in particular, to an information receiving method and apparatus, an information transmitting method and apparatus, and a storage medium.

### Background

In the related technology, paging can detect the reachability of a user equipment (UE) in a radio resource control (RRC)_IDLE/Inactive state and achieve the following purposes:
triggering RRC setup of the UE; triggering RRC resume of the UE; notifying UE to update a system message or receive Earthquake and Tsunami Warning System (ETWS, corresponding to SIB6 and SIB7)/Commercial Mobile Alert System (CMAS, corresponding to SIB8) notifications.

The UE needs to monitor Paging when it is in the RRC-IDLE state or the RRC-inactive state. For example, when the UE is in a standby state, if there is an incoming call, a network side issues Paging to instruct the UE.

Specific paging includes two parts: a paging notification short message and a paging message. The paging notification short message is used for indicating whether a paging message exists, such as a paging-radio network temporary identifier (P-RNTI) or a paging early indication (PEI) in a sub-group. To be specific, at a paging occasion (PO), a corresponding sub-grouping value in the P-RNTI or the PEI is 1, indicating that a corresponding paging message exists. The paging message is used for indicating a paged UE. For example, the content of a unicast paging message is a UE ID, and the content of a multicast paging message is a temporary mobile group identifier (TMGI).

There is no effective solution provided for the problems of how a UE receives sub-grouping configuration information and PEI configuration information during transmission of a PEI in the related technology and how UEs that have joined and not joined a multicast broadcast service (MBS) session detect a PEl.

### Summary

Embodiments of the present disclosure provides an information receiving method and apparatus, an information transmitting method and apparatus, a storage medium, and an electronic apparatus, so as to at least solve the problems of how a UE receives sub-grouping configuration information and PEI configuration information during transmission of a PEI in the related technology and how UEs that have joined and not joined a MBS session detect a PEl.

According to an embodiment of the present disclosure, an information receiving method is provided, including: A UE in an RRC_UNCONNECTED state receives sub-grouping configuration information and PEI configuration information by means of a system broadcast message, wherein a UE that has joined an MBS session does not detect a PEI, and detects a paging message at a paging occasion; and a UE that has not joined the MBS session detects a PEI at a PEI occasion according to the sub-grouping configuration information and the PEI configuration information; and if the PEI configuration information indicates that a paging message of sub-grouping to which the UE belongs exists, the UE detects the paging message at the paging occasion.

According to another exemplary embodiment of the present disclosure, an information transmitting method is provided, including: A first base station transmits PEI configuration information and sub-grouping configuration information; and the first base station transmits a PEI at a PEI occasion, and transmitting a paging message at a paging occasion.

According to another embodiment of the present disclosure, an information receiving apparatus is provided, applied to a UE in an RRC_UNCONNECTED state, wherein the information receiving apparatus includes: a receiving module, configured for: receiving sub-grouping configuration information and PEI configuration information by means of a system broadcast message, wherein a UE that has joined an MBS session does not detect a PEI, and detects a paging message at a paging occasion, and a UE that has not joined the MBS session detects a PEI at a PEI occasion according to the sub-grouping configuration information and the PEI configuration information; and a detection module, configured for: if the PEI configuration information indicates that a paging message of sub-grouping to which the UE belongs exists, detecting the paging message at the paging occasion.

According to another embodiment of the present disclosure, an information transmitting apparatus is further provided, including: a first transmitting module, configured for transmitting PEI configuration information and sub-grouping configuration information; and a second transmitting module, configured for: transmitting a PEI at a PEI occasion, and transmitting a paging message at a paging occasion.

According to still another embodiment of the present disclosure, a computer-readable storage medium is further provided. The computer-readable storage medium has a computer program stored therein, and the computer program is configured for, when run, executing the steps in any one of the method embodiments.

According to yet still another embodiment of the present disclosure, an electronic apparatus is further provided, including a memory and a processor. The memory has a computer program stored therein. The processor is configured for running the computer program to execute the steps in any one of the method embodiments.

According to the present disclosure, a UE in an RRC_UNCONNECTED state receives sub-grouping configuration information and PEI configuration information by means of a system broadcast message, wherein a UE that has joined an MBS session does not detect a PEI, and detects a paging message at a paging occasion; and a UE that has not joined the MBS session detects a PEI at a PEI occasion according to the sub-grouping configuration information and the PEI configuration information; and if the PEI configuration information indicates that a paging message of sub-grouping to which the UE belongs exists, the UE detects the paging message at the paging occasion, thereby solving the problems of how a UE receives sub-grouping configuration information and PEI configuration information during transmission of a PEI in the related technology and how UEs that have joined and not joined a MBS session detect a PEI. Effects of reducing a load of an MBS paging signaling and improving the MBS communication reliability and the network running performance are achieved.

### Brief Description of the Drawings

Fig. 1 is a structural block diagram of hardware of a computer terminal for performing an information receiving method according to an embodiment of the present disclosure;
Fig. 2 is a flowchart of an information receiving method according to an embodiment of the present disclosure;
Fig. 3 is a flowchart of an information transmitting method according to an embodiment of the present disclosure;
Fig. 4 is a flowchart of implementation of a core network paging message in the existing technology;
Fig. 5 is a flowchart of implementation of a radio access network (RAN) paging message in the existing technology;
Fig. 6 is an optional schematic diagram of a system architecture in the existing technology;
Fig. 7 is an optional flowchart (I) according to an embodiment of the present disclosure;
Fig. 8 is an optional flowchart (II) according to an embodiment of the present disclosure;
Fig. 9 is an optional flowchart (III) according to an embodiment of the present disclosure;
Fig. 10 is an optional flowchart (IV) according to an embodiment of the present disclosure;
Fig. 11 is an optional flowchart (V) according to an embodiment of the present disclosure;
Fig. 12 is an optional flowchart (VI) according to an embodiment of the present disclosure;
Fig. 13 is an optional flowchart (VII) according to an embodiment of the present disclosure;
Fig. 14 is an optional schematic diagram (I) of operation of a base station according to an embodiment of the present disclosure;
Fig. 15 is an optional schematic diagram (II) of operation of a base station according to an embodiment of the present disclosure;
Fig. 16 is an optional schematic diagram (III) of operation of a base station according to an embodiment of the present disclosure;
Fig. 17 is an optional schematic diagram (IV) of operation of a base station according to an embodiment of the present disclosure;
Fig. 18 is an optional schematic diagram (V) of operation of a base station according to an embodiment of the present disclosure;
Fig. 19 is an optional schematic diagram (I) of operation of an access and mobility management function (AMF) according to an embodiment of the present disclosure;
Fig. 20 is an optional schematic diagram (II) of operation of an AMF according to an embodiment of the present disclosure;
Fig. 21 is an optional schematic diagram (III) of operation of an AMF according to an embodiment of the present disclosure;
Fig. 22 is an optional schematic diagram of composition of a UE according to an embodiment of the present disclosure;
Fig. 23 is an optional schematic diagram of composition of a base station according to an embodiment of the present disclosure;
Fig. 24 is an optional schematic diagram of composition of an AMF according to an embodiment of the present disclosure;
Fig. 25 is a structural block diagram of an optional information receiving apparatus according to an embodiment of the present disclosure; and
Fig. 26 is a structural block diagram of an optional information transmitting apparatus according to an embodiment of the present disclosure.

### Detailed Description of the Embodiments

The embodiments of the present disclosure will be described in detail below with reference to the schematic diagrams and the embodiments.

It should be noted that the terms "first", "second", etc. in the specification and claims of the present disclosure and the above schematic diagrams are defined to distinguish similar objects, and do not have to be used to describe a specific order or sequence.

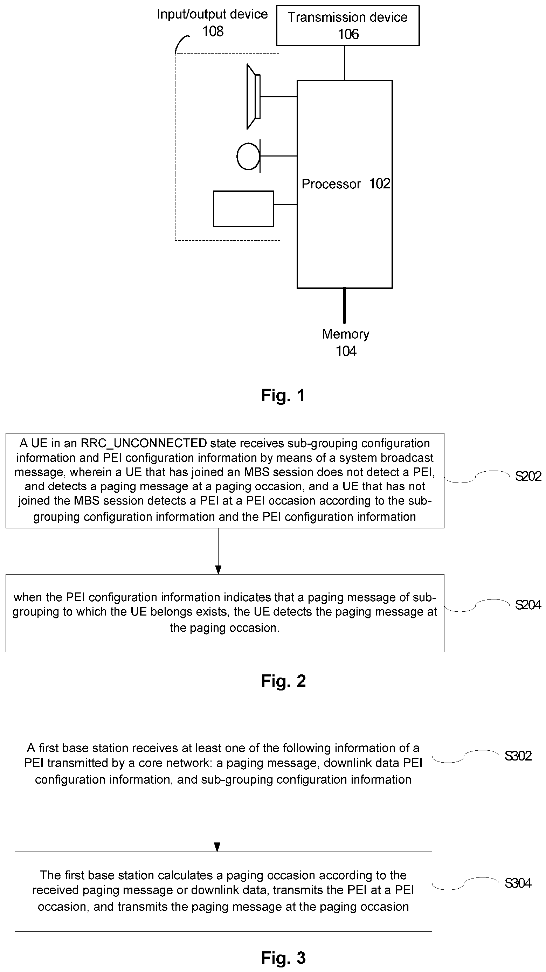

The method embodiments according to the embodiments of the present disclosure can be performed on a computer terminal, a second node of a computer, or a similar arithmetic apparatus. Being performed on the computer terminal is taken as an example. Fig. 1 is a structural block diagram of hardware of a computer terminal for performing an information receiving method according to an embodiment of the present disclosure. As shown in Fig. 1, the computer terminal may include one or more (only one is shown in Fig. 1) processors 102 (the processor 102 may include but are not limited to a micro processing unit (MCU), a field programmable gate array (FPGA), and other processing apparatuses) and memories 104 configured for storing data. The computer terminal may further include a transmitting device 106 for a communication function and an input/output device 108. A person of ordinary skill in the art can understood that the structures shown in Fig. 1 are only illustrative, and a limitation will not be made on the structures of the computer terminal. For example, the computer terminal may further include more or fewer components than those shown in Fig. 1, or have a configuration different from that shown in Fig. 1.

The memory 104 may be configured for storing a computer program, such as software programs and modules of application software, such as a computer program corresponding to the information receiving method in the embodiments of the present disclosure. The processor 102 executes various functional applications and data processing by running the computer program stored in the memory 104, namely, to implement the above method. The memory 104 may include high-speed random access memory and may also include a non-volatile memory, such as one or more magnetic storage apparatuses, a flash memory, or other non-volatile solid-state memories. In some instances, the memory 104 may further include a memory remotely located with respect to the processor 102. These remote memories can be connected to the computer terminal through a network. Examples of the above network include, but are not limited to, Internets, intranets, local area networks, mobile communication networks, and combinations thereof.

The transmitting device 106 is configured for receiving or transmitting data through a network. The specific examples of the above network may include a wireless network provided by a communication provider of the computer terminal. In one example, the transmitting device 106 includes a Network Interface Controller (NIC) that can be connected to other network devices through a first base station for communication with the Internet. In one example, the transmitting device 106 may be a Radio Frequency (RF) module configured for communicating with the Internet in a radio manner.

This embodiment provides an information receiving method run on the above computer terminal. Fig. 2 is a flowchart of an information receiving method according to an embodiment of the present disclosure. As shown in Fig. 2, the flow includes the following steps:
Step S202: A UE in an RRC_UNCONNECTED state receives sub-grouping configuration information and PEI configuration information by means of a system broadcast message, wherein a UE that has joined an MBS session does not detect a PEI, and detects a paging message at a paging occasion, and a UE that has not joined the MBS session detects a PEI at a PEI occasion according to the sub-grouping configuration information and the PEI configuration information.
Step S204: If the PEI configuration information indicates that a paging message of sub-grouping to which the UE belongs exists, the UE detects the paging message at the paging occasion.

It should be noted that according to message sources, paging may be divided into:
5th generation core network (5GC) paging, from an RCC_IDLE state of a 5GC, wherein when downlink data arrives at a UE in an RCC_IDLE state, the 5GC notifies the UE through a paging message; and
an RAN paging, from a gNB, wherein when downlink data arrives at a UE in an RRC_INACTIVE state, the gNB notifies, through an RAN paging message, the UE to start data transmission.

A final paging message is issued by the gNB to the UE through an air interface.

The paging message is carried by a paging control channel (PCCH) logic channel of a PCCH; a data block of the PCCH logic channel is carried by a paging channel (PCH) transmission channel; and a data block of the PCH transmission channel is carried by a physical downlink shared channel (PDSCH). Since the PDSCH is a physical downlink shared channel, in addition to carrying the PCH transmission channel, the PDSCH may also carry a downlink shared channel (DL-SCH) transmission channel. Therefore, before receiving a paging message, a terminal needs to first monitor a physical downlink control channel (PDCCH), and then determine, according to whether the PDCCH carries a paging-radio network temporary identifier (P-RNTI), whether a network has transmitted a paging message to itself during a current paging cycle.

A channel of a physical layer corresponding to Paging is a PDSCH, and the PDSCH is scheduled by using downlink control information (DCI) format 1-0 scrambled by the P-RNTI (a value of which is 0xFFFF).

There are two types of paging triggering modes in NR: core network triggering and base station triggering. The base station triggering belongs to a new content of the NR.

In order to reduce the power consumption of the UE in the RRC-IDLE/RRC-INACTIVE state, the UE uses discontinuous reception (DRX) to receive the paging message. This can allow the UE to only wake up and receive the paging message within fixed time, and to sleep at the rest of time to reduce power consumption and prolong the battery life. Each wake-up cycle is referred to as a DRX cycle. There are several paging frames (PFs) within a DRX cycle, and each PF corresponds to several paging occasions (POs).

The UE wakes up only once within a DRX cycle to monitor a PO. The UE monitors one PO of each DRX cycle. The PO is a group of PDCCH monitoring occasions and may include a plurality of slots (such as subframes or orthogonal frequency division multiplexing (OFDM) symbols) that may transmit paging DCI. A PF is a radio frame that may include one or more POs or a starting point of a PO.

DRX cycle represents a cycle during which the UE detects Paging. PF represents a system frame for detecting Paging. PO represents a specific PDCCH monitoring occasion for detecting Paging.

PDCCH monitoring occasion means a time domain position of a control resource set (CORESET), indicated by a paging search space. Due to the CORESET corresponding to the search space, it can specifically determine a CORESET time-frequency resource of the PDCCH scrambled by the P-RNTI. Through the search space, the UE may determine a cycle and offset in slot, and the number of continuous slots in each cycle and a starting symbol position in each slot, thus determining all PDCCH monitoring occasions. A time-frequency resource of each CORESET may be determined according to information indicated by the corresponding CORESET.

In long time evolution (LTE), a PO is a subframe, and the UE may determine a subframe that receives paging. In NR, the search space is no longer a fixed time domain position in each frame. To be specific, the cycle is no longer in frame, but in slot. Therefore, it is necessary to determine the PDCCH monitoring occasions through the above search space. Moreover, since each PO corresponds to all synchronization signal blocks (SSBs), so that each PO needs to include S PDCCH monitoring occasions, and each PDCCH monitoring occasion corresponds to one SSB, where S is a quantity of SSBs that are actually transmitted within one SSB set cycle. Therefore, after the PDCCH monitoring occasions, the PFs, and the POs are determined, the PDCCH monitoring occasions also need to correspond to the various POs, so as to determine PDCCH monitoring occasions of a UE for paging. The PFs are just starting points of all the POs corresponding to the PFs, and a PF and system frames behind it until a next PF may all have POs. The PDCCH monitoring occasions, determined by the paging search space, between two PFs need to be numbered. After the numbering, there is no need to consider frames and search space cycles during the composition of a PO. A plurality of PDCCH monitoring occasions that form a PO may cross frames or cycles. A difference in the POs is actually the biggest difference between LTE paging and NR paging.

In 5G, a PO is no longer a subframe, but several PDCCH monitoring occasions.

A correspondence mode is determined by a parameter, namely first PDCCH-Monitoring Occasion Of PO, in PDCCH ConfigCommon in SIB1. Numbering starts from the first PDCCH monitoring occasion of a PF. If this parameter exists, a starting PDCCH monitoring occasion of an (i_s+1)th PO is numbered to be an (i_s+1)th value of this parameter. If this parameter does not exist, the starting PDCCH monitoring occasion of the (i_s+1)th PO is numbered to be i_s*S.

In 5G, a PF is still a system frame, but a PO is no longer only included in the PF, meaning that a PF no longer includes several POs, but corresponds to several POs, because all the PDCCH monitoring occasions between two PFs are PDCCH monitoring occasions that form the POs.

According to the above steps, a UE in an RRC_UNCONNECTED state receives sub-grouping configuration information and PEI configuration information by means of a system broadcast message, wherein a UE that has joined an MBS session does not detect a PEI, and detects a paging message at a paging occasion; and a UE that has not joined the MBS session detects a PEI at a PEI occasion according to the sub-grouping configuration information and the PEI configuration information; and if the PEI configuration information indicates that a paging message of sub-grouping to which the UE belongs exists, the UE detects the paging message at the paging occasion, thereby solving the problems of how a UE receives sub-grouping configuration information and PEI configuration information during transmission of a PEI in the related technology and how UEs that have joined and not joined a MBS session detect a PEI. Effects of reducing a load of an MBS paging signaling and improving the MBS communication reliability and the network running performance are achieved.

In an embodiment, the above RRC_UNCONNECTED state at least includes one of the following: the UE that has not joined the MBS session is in an RRC_IDLE state; the UE that has not joined the MBS session is in an RRC_INACTIVE state; the UE that has joined the MBS session is in an RRC_IDLE state; and the UE that has joined the MBS session is in an RRC_INACTIVE state.

It should be noted that the generation of the above various RRC_UNCONNECTED states is due to the use of the following three methods in the existing technology to improve the paging success rate, including:
Sub-grouping: If a plurality of UEs share the same PO, there is a possibility of an unrealistically large number of paging. Sub-grouping may be used to divide a UE in a PO into N subgroups to minimize erroneous paging alarms.

PEI: It notifies a UE whether to receive a next PO. A base station indicates configuration information of PEI through a system broadcast message. A UE that supports PEI monitors a PEI occasion (PEI-O) in each DRX cycle. A PEI-O is a set of PDCCH monitoring occasion, including a plurality of slots: A specific PEI content is indicated by DCI format 2_7, where each bit indicates a paging group or a paging subgroup. When a bit of a group or subgroup to which the UE belongs is 1, it indicates that there is a paging message for the UE, and the UE further reads the corresponding paging message. If the bit is 0, it indicates that there is no paging message for the corresponding group or subgroup.

Cross-slot scheduling: This paging enhancement introduces a delay KO between scheduling information included in the PDCCH (PO) and the paging message carried in the PDSCH, allowing the UE to read the PDSCH only when there is a paging message.

In order to reduce the power consumption of a 5G terminal caused by an erroneous paging alarm, a terminal (UE) group that monitors the same PO may be further divided into a plurality of subgroups. Through the sub-grouping, if a subgroup to which a terminal (UE) belongs is paged as indicated by a relevant PEI, the UE should monitor the PDCCH in its PO for paging. If the UE cannot find, in a cell, its subgroup ID with a PEI configuration, or if the UE cannot monitor an associated PEI occasion corresponding to the PO of the UE, the UE should monitor paging in the PO of the UE. There are two methods for paging sub-grouping: CN sub-grouping and UE ID based sub-grouping.

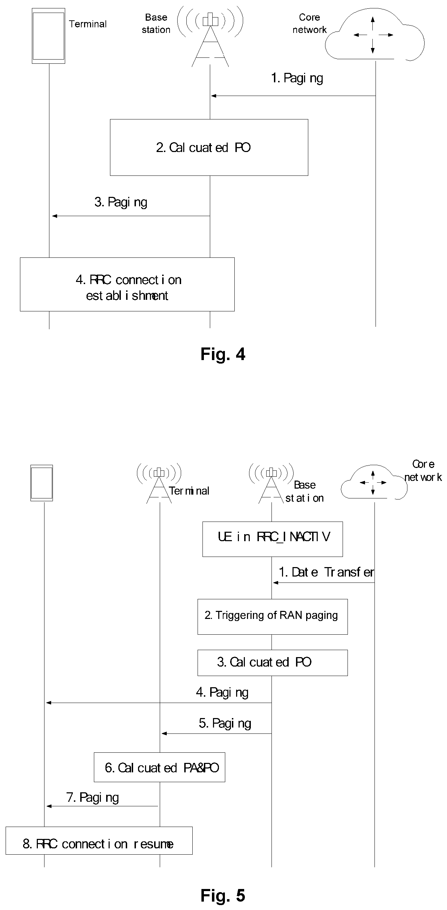

Fig. 4 to Fig. 5 respectively show flowcharts of a paging signaling process of a core network and an access network. As shown in Fig. 4 and Fig. 5. In paging initiated by a RAN in Fig. 5, if a gNB detects that a UE in an RRC-INACTIVE state needs to transmit downlink data, the gNB initiates paging for the UE within an RAN-based notification area.

MBS Paging: An MBS introduced by 5G R17 is mainly aimed at public safety, Internet of things (IoT) applications, software delivery, TV Video, Internet Protocol Television (IPTV), live streaming sales, and other scenarios. For example, in an emergency, a large number of users at specific positions can receive pre-warning or notifications simultaneously. R17 supports flexible reuse and coexistence of multicast/broadcast and existing unicast systems through establishment of architecture, supporting for different levels of services, flexible network deployment and operations, a multicast/broadcast air interface technology, and the like. At present, multicast communication in the standard protocol is targeted at RRC_CONNECTED UEs. UEs that have joined a multicast group may be in an RRC_IDLE/RRC_INACTIVE state before start of a multicast service they are interested in receiving. To instruct the multicast service to be activated, the base station may transmit a multicast paging message at an air interface. Multicast paging and unicast paging are transmitted on the same PO. The content of the multicast paging message is a multicast service session identifier, which is a Temporary Mobile Group Identity (TMGI). The UEs interested in receiving the multicast service determine, through the TMGI in the paging message, whether the multicast service is a desired multicast service. If yes, the UE enters the RRC_CONNECTED state to start to receive the multicast service carried on the TMGI. Otherwise, the UE continues to maintain the RRC-IDLE/RRC-INACTIVE state and detects a corresponding paging notification.

In an embodiment, the method further includes: The UE that has not joined the MBS session is used as a repeater device of a sidelink UE, and the UE that has joined the MBS session is used as a repeater device of the sidelink UE.

In an embodiment, the sub-grouping configuration information in step S202 above at least includes one of the following: only supporting core network-controlled sub-grouping, only supporting UE identifier-based sub-grouping, and supporting both core network-controlled sub-grouping and UE identifier-based sub-grouping.

In an embodiment, the method further includes: A UE that supports PEI supports at least UE identifier-based sub-grouping.

In an embodiment, for the supporting core network-controlled sub-grouping, the method further includes: The core network-controlled sub-grouping supported by the UE is indicated to an AMF through non-access stratum (NAS) signaling, and a sub-grouping identifier configured by the AMF is received.

In an embodiment, for the supporting UE identifier-based sub-grouping, the method further includes: The number of sub-groupings indicated by a base station through a system message is received, wherein the UE identifier-based sub-grouping is determined by the base station and the UE according to a UE identifier and the number of sub-groupings.

In an embodiment, the PEI configuration information includes: transmitting time and frequency of the PEI; the PEI indicates whether sub-grouping corresponding to the UE includes a paging message; and the paging message includes: a unicast paging message and MBS paging message.

In an embodiment, based on the above steps, the method further includes: In a case of determining that the UE that has not joined the MBS session is in the RRC_IDLE state, the PEI is detected according to the received PEI configuration information, and whether the UE detects a unicast paging message at a paging occasion is determined according to the PEI.

In an embodiment, the method further includes: In a case of determining that the UE detects a unicast paging message at a paging occasion, whether a UE identifier in the unicast paging message is an identifier configured by an upper layer of the UE is determined; and if the UE identifier is the identifier configured by the upper layer of the UE, the UE identifier is forwarded to the upper layer, wherein in a case that the upper layer supports a paging reason indication, a paging reason corresponding to the unicast paging message is forwarded to the upper layer.

In an embodiment, the method further includes: In a case of determining that the UE that has not joined the MBS session is in the RRC_INACTIVE state, the PEI is detected according to the received PEI configuration information, so as to determine whether the UE detects a unicast paging message at a paging occasion.

In an embodiment, the method further includes: In a case of determining that the UE detects a unicast paging message at a paging occasion, whether a UE identifier in the unicast paging message is an identifier corresponding to an RRC connection suspended UE context of the RRC_INACTIVE UE is determined; and if the UE identifier in the unicast paging message is an identifier corresponding to an RRC connection suspended UE context of the RRC_INACTIVE UE, an RRC connection resume process is started.

In an embodiment, if the UE identifier is the identifier configured by the upper layer of the UE, the method further includes: The UE identifier is forwarded to the upper layer, wherein in a case that the upper layer supports a paging reason indication, a paging reason corresponding to the unicast paging message is forwarded to the upper layer.

In an embodiment, the method further includes: In a case of determining that the UE that has joined the MBS session is in the RRC_IDLE state, the paging message is detected at the paging occasion; and if it is determined that a temporary mobile group identity (TMGI) in the paging message is an identifier of the MBS session that the UE has joined, the TMGI is forwarded to the upper layer.

In an embodiment, the method further includes: In a case of determining that the UE that has joined the MBS session is in the RRC_INACTIVE state, the paging message is detected at the paging occasion; and if a TMGI in the paging message is an identifier of the MBS session that the UE has joined, and the paging message does not include the identifier configured by the upper layer of the UE, the UE initiates an RRC connection resume process.

In an embodiment, the method further includes: In a case of determining that the UE is used as a sidelink relay device, the paging message is received according to the PEI; and if it is determined that a user identifier in the paging message is an identifier of a remote UE, the paging message is forwarded to the remote UE through the UE.

The embodiments of the present disclosure further provide an information transmitting method run on the above computer terminal. Fig. 3 is a flowchart of an information transmitting method according to an embodiment of the present disclosure. As shown in Fig. 3, the flow includes the following steps:
Step S302: A first base station transmits PEI configuration information and sub-grouping configuration information.
Step S304: The first base station transmits a PEI at a PEI occasion and transmits a paging message at a paging occasion.

According to the above steps, a first base station transmits PEI configuration information and sub-grouping configuration information, and the first base station transmits a PEI at a PEI occasion and transmits a paging message at a paging occasion. By the adoption of the above solution, the problems of how a UE receives sub-grouping configuration information and PEI configuration information during transmission of a PEI in the related technology and how UEs that have joined and not joined a MBS session detect a PEI are solved. Effects of reducing a load of an MBS paging signaling and improving the MBS communication reliability and the network running performance are achieved.

In an embodiment, the method further includes: The first base station configures a sub-grouping identifier of a UE, and transmits the subgroup identifier.

In an embodiment, the method further includes: The first base station configures a subgroup and/or the PEI.

In an embodiment, the method further includes: A core network-controlled subgroup configuration is transmitted to an AMF through the UE to instruct the AMF to configure the sub-grouping identifier of the UE; and the sub-grouping identifier transmitted by the AMF is received.

In an embodiment, step S304 above further includes: In a case that the first base station calculates a paging occasion according to downlink data, the method further includes: The first base station configures a paging message and transmits the paging message.

In an embodiment, the method further includes: The first base station transmits the paging message to a second base station to instruct the second base station to calculate a paging occasion according to the paging message, and the second base station configures the sub-grouping identifier of the UE.

The embodiments of the present disclosure provide a plurality of embodiments to explain this solution in detail, specifically including:
Embodiment 1: Scenario for paging an RRC-IDLE UE that has joined an MBS session

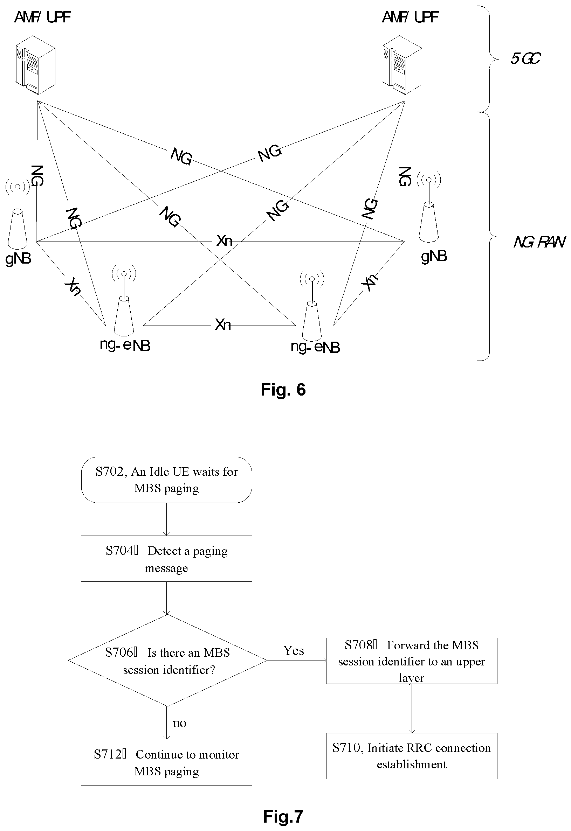

The solution of Embodiment 1 will be described below in combination with Fig. 7. Fig. 7 is an optional flowchart (I) according to an embodiment of the present disclosure, specifically including the following steps:
Step S702, an RRC-IDLE UE expects to receive an MBS session paging message. The IDLE UE has joined an MBS session and waits for the desired MBS session to begin.
Step S704, the UE detects a paging message at a paging occasion. The UE calculates the paging occasion (PO) and detects the paging message at the PO, namely, detects whether there is a PDCCH scrambled with a P-RNTI; and if yes, it indicates that there is a paging message.
Step S706, whether the paging message includes an MBS session identifier of the MBS session that the UE has joined is determined; if yes, step S708 is executed, and otherwise, step S712 is executed. Whether the paging message includes the MBS session identifier, i.e. a TMGI, of the MBS session that the UE has joined is checked; if the paging message includes the TMGI indicating that the UE has joined the MBS session, the paging message is a paging message required by the UE, and otherwise, the paging message is not the paging message of the UE. If the paging message does not include the TMGI indicating that the UE has joined the MBS session, but includes a UE-Identity allocated by an upper layer, it indicates that the paging message is a unicast paging message of the UE, and the UE forwards the UE-Identity to the upper layer and establishes an RRC connection with a base station for communication. If the paging message includes both the TMGI required by the UE and the UE-Identity, it indicates that there are both unicast paging and MBS paging for the UE. If the UE may receive both a unicast service and an MBS service, for example, if the UE has a duplex receiver, the UE forwards the TMGI and the UE-Identity to the upper layer and performs unicast communication and MBS communication simultaneously. If the UE may not perform the unicast communication and the MBS communication simultaneously, the UE preferentially processes a service with a high priority according to the priorities of a unicast service and an MBS service.
Step S708, the UE forwards the MBS session identifier to the upper layer. The UE forwards the corresponding TMGI in the paging message to the upper layer. The upper layer is an upper layer of an RRC layer, which is an NAS layer. The upper layer initiates an RRC connection establishment process according to a received content.
Step S710, the UE initiates an RRC connection establishment process. The UE transmits an RRC connection establishment request message to the base station.
Step S712, the UE continues to monitor an MBS paging message. If the UE does not detect a desired paging message, the UE may continue to detect a paging message at a next PO.

### Embodiment 2: Scenario for paging an RRC-INACTIVE UE that has joined an MBS session

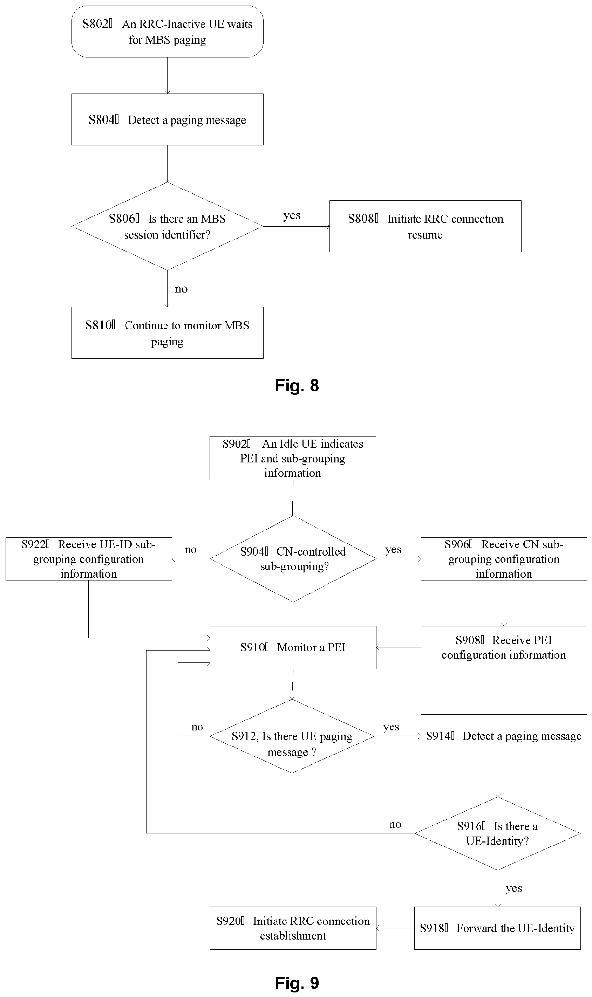

The solution of Embodiment 2 will be described below in combination with Fig. 8. Fig. 8 is an optional flowchart (II) according to an embodiment of the present disclosure, specifically including the following steps:
Step S802, an RRC-INACTIVE UE expects to receive an MBS session paging message.
Step S804, the UE detects a paging message at a paging occasion.
Step S806, whether the paging message includes an MBS session identifier of an MBS session that the UE has joined is determined; if yes, step S808 is executed, and otherwise, step S810 is executed.
Step S808, the UE initiates an RRC connection resume process. If the paging message does not include a UE-Identity allocated by an upper layer, the RRC-INACTIVE UE initiates the RRC connection resume process and resumes an RRC connection to a base station. If the RRC connection resume fails, the UE may release RRC connection and return to an RRC-IDLE state, and reinitiates an RRC connection establishment process.
Step S810, the UE continues to monitor an MBS paging message.

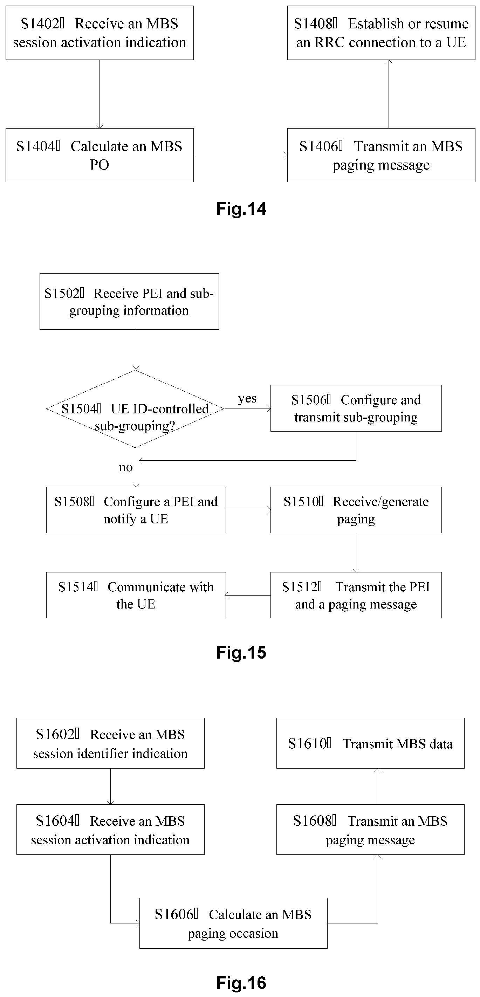

In addition, for Embodiment 1 and Embodiment 2 above, the embodiments of the present disclosure further provide an optional schematic diagram of operation of a base station. As shown in Fig. 14, Fig. 14 is an optional schematic diagram (I) of operation of a base station according to an embodiment of the present disclosure, specifically including the following steps:
Step S1402, a first base station receives MBS session activation indication information.
Step S1404, the first base station calculates a PO.
Step S1406, the base station transmits an MBS paging message at the PO. For a paging process initiated by an RAN, the first base station transmits the MBS paging message to another base station in an RAN area, and a base station, which supports an MBS, in the RAN area transmits the MBS paging message at the PO.
Step S1408, the base station establishes or resumes an RRC connection to the UE. The UE establishes or resumes the RRC connection to the base station in the area where the UE is located.

### Embodiment 3: Scenario for paging an RRC-IDLE UE that has not joined an MBS session and supports PEI and sub-grouping

The solution of Embodiment 3 will be described below in combination with Fig. 9. Fig. 9 is an optional flowchart (III) according to an embodiment of the present disclosure, specifically including the following steps:
Step S902, a UE indicates PEI and paging sub-grouping supporting information to a core network. The UE transmits indication information to an AMF of the core network during registration: supporting PEI and core network (CN)-controlled sub-grouping/UE ID-controlled sub-grouping, wherein there are two control modes for paging sub-grouping: CN control and UE ID control. The UE supports one of the modes and indicates the mode supported by the UE to the AMF.
Step S904, whether the CN-controlled sub-grouping is supported is determined. If yes, step S906 is executed, and otherwise, step S922 is executed. If the UE supports the CN-controlled sub-grouping, paging sub-grouping is configured by the AMF, and otherwise, paging sub-grouping is configured by a base station.
Step S906, the UE receives a sub-grouping ID configuration message transmitted by the AMF. The AMF indicates sub-grouping ID configuration information to the UE through an NAS message.
Step S908, the UE receives PEI configuration information. The UE receives the PEI configuration information transmitted by the base station through a system message, including a time domain position of PEI, a frequency domain position of PEI, the number of PEI-Os, a payload (capacity) of PEI, and the like. The time domain position of the specific PEI-O corresponding to the UE is calculated according to system message indication information, a UE ID, and a UE DRX cycle based on a formula. The PEI generally needs to be transmitted before the paging message corresponding to the UE is transmitted, that is, the time domain position of the PEI-O is in front of the corresponding PO.
Step S910, the UE monitors the PEI. The UE monitors the PEI at the PEI-O, that is, detects whether a PEI-RNTI exists at the PEI-O. If yes, it indicates that there is a PEI, and otherwise, it indicates that there is no PEI.
Step S912, the UE determines whether there is desired paging according to the PEI. If yes, step S914 is executed, and otherwise, step S910 is executed. The UE reads the content of the PEI, and the content of the PEI is indicated in a bitmap manner in DCI on a PDCCH. For example, eight bits indicate eight sub-groupings, wherein bit 1 is used for indicating that there is corresponding sub-grouping paging, and bit 0 is used for indicating there is no corresponding sub-grouping paging. For example, PEI=01100010 indicates that there are paging messages for sub-groupings 2, 6, and 7. If the UE belongs to sub-groupings 2, 6, and 7 (such as sub-grouping Ids of the UE=2, 6, or 7), the UE needs to further read paging messages in subsequent POs. Otherwise, (namely, if the UE does not belong to sub-groupings 2, 6, or 7), the UE does not need to read the paging messages in the subsequent POs. If the UE cannot monitor the PEI, for example, if the UE is in a cell reselection process, the UE monitors paging of the PO.
Step S914, the UE detects a paging message. The PEI indicates that there is a paging message of the sub-grouping to which the UE is located, and the UE continues to detect the paging messages in the subsequent POs.
Step S916, whether the paging message includes a UE-Identity allocated by an upper layer. If yes, step S918 is executed, and otherwise, step S910 is executed. If the paging message includes the UE-Identity allocated by the upper layer, it indicates that there is paging for the UE, and the paged UE will further perform processing, and otherwise, the UE continues to monitor a PEI-O or PO. If the UE cannot monitor the PEI, for example, if the UE is in a cell reselection process, the UE monitors paging of the PO, and otherwise, the UE continues to monitor the PEI-O.
Step S918, the UE forwards the UE-Identity to the upper layer. The UE forwards the UE-Identity in the paging message to the upper layer, namely, an NAS layer.
Step S920, the UE initiates an RRC connection establishment process. The upper layer of the UE initiates an RRC connection establishment process, that is, the UE transmits an RRC connection request message to the base station.
Step S922, the UE receives sub-grouping configuration message configured by the base station, and step S910 is then executed. If the UE supports UE ID-controlled sub-grouping, a sub-grouping ID is configured by the base station and notified by being broadcast through a system message. The UE monitors the PEI-O according to a sub-grouping configuration indicated by the base station.

### Embodiment 4: Scenario for paging an RRC-INACTIVE UE that has not joined an MBS session and supports PEI and sub-grouping

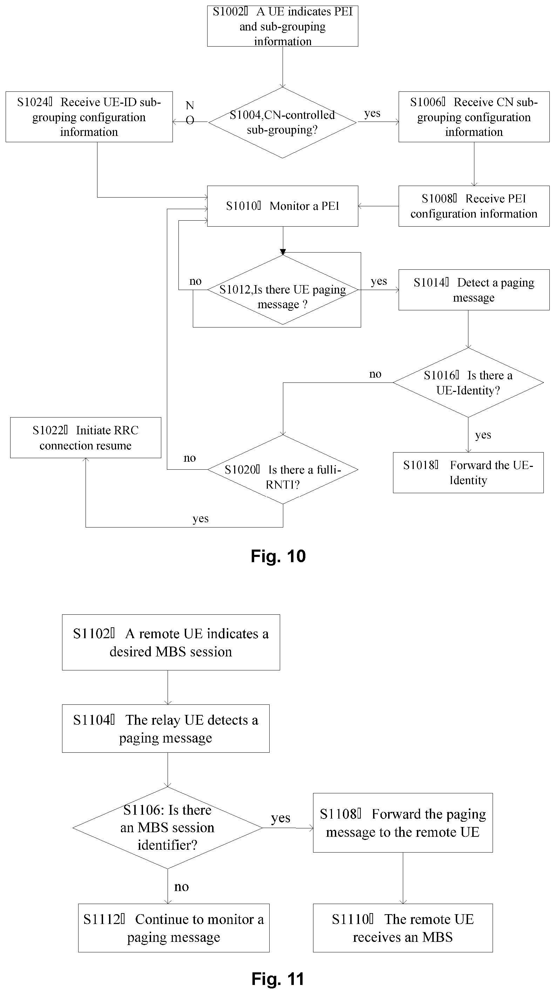

The solution of Embodiment 4 will be described below in combination with Fig. 10. Fig. 10 is an optional flowchart (IV) according to an embodiment of the present disclosure, specifically including the following steps:
Step S1002, a UE indicates PEI and paging sub-grouping supporting information to a core network.
Step S1004, whether the UE supports CN-controlled sub-grouping is determined. If yes, step S1006 is executed, and otherwise, step S1024 is executed.
Step S1006, the UE receives a sub-grouping ID configuration message transmitted by an AMF.
Step S1008, the UE receives a PEI configuration message.
Step S1010, the UE monitors a PEI.
Step S1012, the UE determines, according to the PEI, whether there is desired paging. If yes, step S1014 is executed, and otherwise, step S1010 is executed.
Step S1014, the UE detects a paging message.
Step S1016, whether the paging message includes a UE-Identity allocated by an upper layer is determined. If yes, step S1018 is executed, and otherwise, step S1020 is executed.
Step S1018, the UE forwards the UE-Identity to the upper layer.
Step S1020, whether the paging message includes an RRC connection suspended UE context identifier is determined. If yes, step S1022 is executed, and otherwise, step S1010 is executed. The UE context identifier is a full RNTI, and the identifier is stored in the UE. If the identifier exists, the UE initiates an RRC connection resume process.
Step S1022, the UE initiates the RRC connection resume process. The UE transmits an RRC connection resume request message to a first base station.
Step S1024, the UE receives a sub-grouping configuration message transmitted by the first base station, and step S1010 is executed.

In addition, for Embodiment 3 and Embodiment 4 above, the embodiments of the present disclosure further provide an optional schematic diagram of operation of a base station. As shown in Fig. 15, Fig. 15 is an optional schematic diagram (II) of operation of a base station according to an embodiment of the present disclosure, specifically including the following steps:
Step S1502, a first base station receives PEI and sub-grouping supporting indication information of a UE transmitted by a core network.
Step S1504, the first base station determines whether the UE supports UE ID-controlled sub-grouping. If yes, step S1506 is executed, and otherwise, step S1508 is executed.
Step S1506, the first base station configures and transmits UE ID-controlled sub-grouping information.
Step S1508, the first base station configures a PEI and notifies the PEI to the UE.
Step S1510, the first base station receives/generates a paging message.
Step S1512, the base station transmits the PEI and the paging message. For a paging process initiated by an RAN, the first base station transmits the paging message to another base station in an RAN area, and a base station in the RAN area transmits the paging message at a PO.
Step S1514, the base station establishes or resumes an RRC connection to the UE.

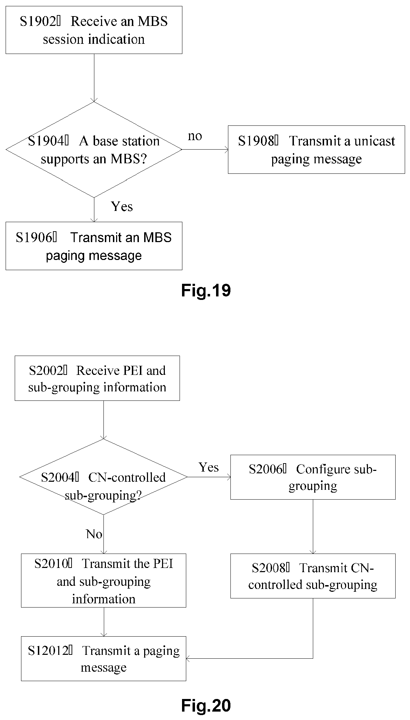

In addition, for Embodiment 3 and Embodiment 4 above, the embodiments of the present disclosure further provide an optional schematic diagram of operation of an AMF. As shown in Fig. 20, Fig. 20 is an optional schematic diagram (II) of operation of an AMF according to an embodiment of the present disclosure, specifically including the following steps:
Step S2002, an AMF receives PEI and sub-grouping supporting indication information transmitted by a UE.
Step S2004, the AMF determines whether the UE supports CN-controlled sub-grouping. If yes, step S2006 is executed, and otherwise, step S2010 is executed.
Step S2006, the AMF configures a CN-controlled sub-grouping ID.
Step S2008, the AMF transmits the CN-controlled sub-grouping ID to a base station and the UE, and step S2012 is executed.
Step S2010, the AMF transmits the PEI and sub-grouping supporting information of the UE to the base station.
Step S2012, the AMF transmits a paging message. The paging message includes one of the following: a remote UE-Identity and a relay UE-Identity which are allocated by an upper layer, and further includes: a paging count, a paging priority, a paging reason, and the like.

### Embodiment 5: Scenario in which a remote UE has joined an MBS session

The solution of Embodiment 5 will be described below in combination with Fig. 11. Fig. 11 is an optional flowchart (V) according to an embodiment of the present disclosure, specifically including the following steps:
Step S1102, a Remote UE indicates a desired MBS session identifier to a Relay UE. The Remote UE has joined an MBS session and is connected to a first base station through the Relay UE. The Remote UE indicates, through a sidelink/PC5 interface, to the Relay UE the MBS session identifier, i.e. a TMGI, of the MBS session that the Remote UE has joined.
Step S1104, the Relay UE detects a paging message at a paging occasion. The Relay UE detects the paging message at its own PO.
Step S1106, whether the paging message includes the desired MBS session identifier is determined. If yes, step S1108 is executed, and otherwise, step S1112 is executed. The Relay UE detects whether the paging message includes the desired MBS identifier, i.e. the TMGI. If yes, it indicates that the MBS session that the Remote UE has joined is activated, and the Remote UE is notified. If the paging message includes a UE-Identity of the Relay UE allocated by an upper layer, it indicates that there is a unicast paging message for the Relay UE. The RRC_IDLE Relay UE may initiate an RCC connection establishment request message to the first base station, and the RRC_INACTIVE UE may initiate an RRC connection resume request message to the first base station.
Step S1108, the Relay UE forwards a corresponding paging content to the Remote UE. The Relay UE forwards the TMGI in the paging message to the Remote UE.
Step S1110, the Remote UE receives MBS. The Remote UE receives desired MBS data through the Relay UE. If the Remote UE may establish an RRC connection to the first base station, the Remote UE initiates an RRC connection request process to the first base station.
Step S1112, the Relay UE continues to monitor paging. If there is no paging message for the Remote UE, the Relay UE may continue to monitor a paging message.

In addition, for Embodiment 5 above, the embodiments of the present disclosure further provide an optional schematic diagram of operation of a base station. As shown in Fig. 16, Fig. 16 is an optional schematic diagram (III) of operation of a base station according to an embodiment of the present disclosure, specifically including the following steps:
Step S1602, a first base station receives MBS session identifier indication information that is transmitted by a Relay UE and indicates that a Remote UE has joined an MBS session.
Step S1604, the first base station receives activation indication information of the MBS session that the Remote UE has joined.
Step S1606, the first base station calculates a PO of the Relay UE.
Step S1608, the base station transmits an MBS paging message at the PO of the Relay UE. For a paging process initiated by an RAN, the first base station transmits the MBS paging message to another base station in an RAN area, and a base station, which supports an MBS, in the RAN area transmits the MBS paging message at the PO.
Step S1610, the base station transmits MBS data.

In addition, for Embodiment 1, Embodiment 2, and Embodiment 5 above, the embodiments of the present disclosure further provide an optional schematic diagram of operation of an AMF. As shown in Fig. 19, Fig. 19 is an optional schematic diagram (I) of operation of an AMF according to an embodiment of the present disclosure, specifically including the following steps:
Step S1902, an AMF receives activation indication information of an MBS session.
Step S1904, the AMF determines whether a base station supports MBS. If yes, step S1906 is executed, and otherwise, step S1908 is executed.
Step S1906, the AMF transmits an MBS paging message including a TMGI to the base station.
Step S1908, the AMF transmits paging message including a UE ID to the base station.

### Embodiment 6: Scenario for a Relay UE that has not joined an MBS session and supports PEI and sub-grouping

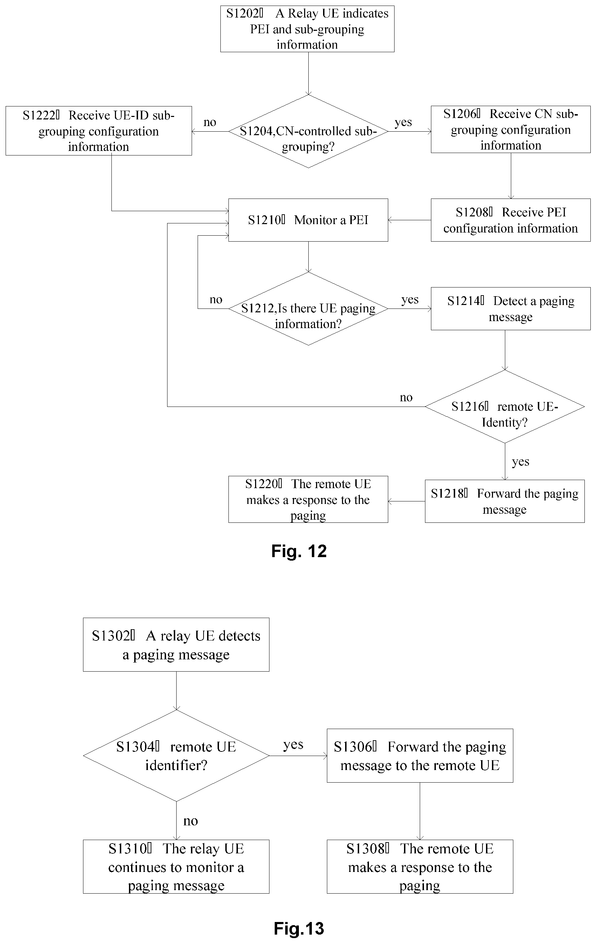

The solution of Embodiment 6 will be described below in combination with Fig. 12. Fig. 12 is an optional flowchart (VI) according to an embodiment of the present disclosure, specifically including the following steps:
Step S1202, a Relay UE indicates PEI and sub-grouping supporting information to an AMF.
Step S1204, whether the Relay UE supports CN-controlled sub-grouping. If yes, step S1206 is executed, and otherwise, step S1222 is executed.
Step S1206, the Relay UE receives a sub-grouping ID configuration message transmitted by the AMF.
Step S1208, the Relay UE receives PEI configuration information.
Step S1210, the Relay UE monitors a PEI.
Step S1212, the Relay UE determines, according to the PEI, whether there is desired paging. If yes, step S1214 is executed, and otherwise, step S1210 is executed.
Step S1214, the Relay UE detects a paging message.
Step S1216, whether there is the paging message includes a Remote UE paging identifier. If yes, step S1218 is executed, and otherwise, step S1210 is executed. The Remote UE paging identifier is a Remote UE-Identity allocated by an upper layer. If the paging message includes the Relay UE paging identifier, such as the Relay UE-Identity allocated by the upper layer or an RRC connection suspended Relay UE context identifier (fulll-RNTI), where the UE-Identity allocated by the upper layer is targeted at core network paging, and the fulll-RNTI corresponds to RAN first base station paging, for the core network paging, the Relay UE transmits an RRC connection establishment request message to the first base station, and for the RAN paging, the Relay UE transmits an RRC connection resume request message to the first base station.
Step S1218, the Relay UE forwards a corresponding paging content to the Remote UE.
Step S1220, the Remote UE makes a response to the paging message. The Remote UE communicates with the first base station through the Relay UE or directly.
Step S1222, the Relay UE receives sub-grouping configuration information transmitted by the first base station, and step S1210 is then executed.

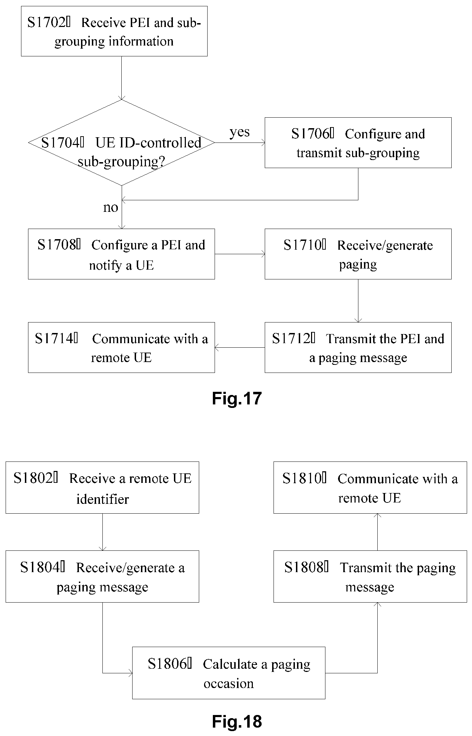

In addition, for Embodiment 6 above, the embodiments of the present disclosure further provide an optional schematic diagram of operation of a base station. As shown in Fig. 17, Fig. 17 is an optional schematic diagram (IV) of operation of a base station according to an embodiment of the present disclosure, specifically including the following steps:
Step S1702, a first base station receives PEI and sub-grouping supporting indication information of a Relay UE transmitted by a core network.
Step S1704, the first base station determines whether the Relay UE supports UE ID-controlled sub-grouping. If yes, step S1706 is executed, and otherwise, step S1708 is executed.
Step S1706, the first base station configures and transmits Relay UE ID-controlled sub-grouping information.
Step S1708, the first base station configures a PEI and notifies the PEI to the UE.
Step S1710, the first base station receives/generates a Remote UE paging message.
Step S1712, the base station transmits a PEI and a paging message. For a paging message generated by an RAN, the first base station further needs to transmit a PEI and a paging message to another base station in an RAN area, and the base station in the RAN area needs to transmit the PEI and the paging message.
Step S1714, the base station transmits data to the Remote UE.

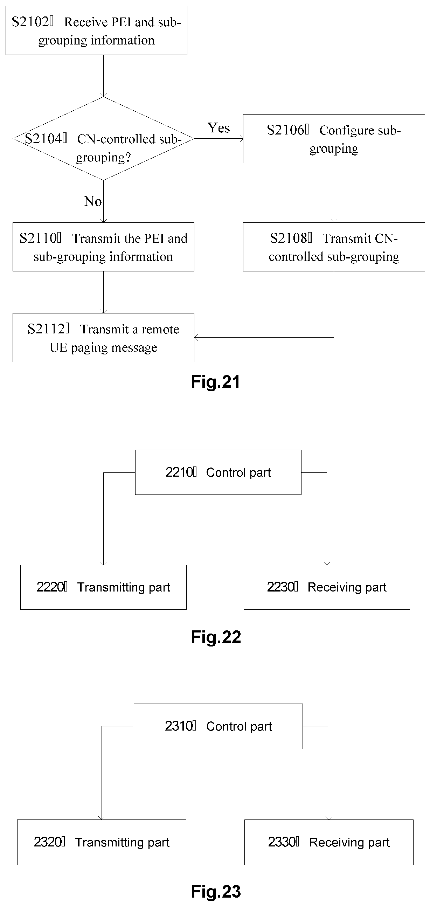

In addition, for Embodiment 6 above, the embodiments of the present disclosure further provide an optional schematic diagram of operation of an AMF. As shown in Fig. 21, Fig. 21 is an optional schematic diagram (III) of operation of an AMF according to an embodiment of the present disclosure, specifically including the following steps:
Step S2102, an AMF receives PEI and sub-grouping supporting indication information transmitted by a Relay UE.
Step S2104, the AMF determines whether the Relay UE supports CN-controlled sub-grouping. If yes, step S2106 is executed, and otherwise, step S2110 is executed.
Step S2106, the AMF configures a CN-controlled sub-grouping ID.
Step S2108, the AMF transmits the CN-controlled sub-grouping ID to a base station and the Relay UE.
Step S2110, the AMF transmits the PEI and sub-grouping supporting information of the Relay UE to the base station.
Step S2112, the AMF transmits a Remote UE paging message. The paging message includes one of the following: a Remote UE-Identity and a Relay UE-Identity which are allocated by an upper layer, and further includes: a paging count, a paging priority, a paging reason, and the like.

### Embodiment 7: Scenario for a Relay UE that has not joined an MBS session and does not support PEI and sub-grouping

The solution of Embodiment 7 will be described below in combination with Fig. 13. Fig. 13 is an optional flowchart (VII) according to an embodiment of the present disclosure, specifically including the following steps:
Step S1302, a Relay UE detects a paging message at a paging occasion.
Step S1304, whether the paging message includes a Remote UE paging identifier; if yes, step S1306 is executed, and otherwise, step S1310 is executed.
Step S1306, the Relay UE forwards a corresponding paging content to the Remote UE.
Step S1308, the Remote UE makes a response to the paging message.
Step S1310, the Relay UE continues to monitor paging.

In addition, for Embodiment 7 above, the embodiments of the present disclosure further provide an optional schematic diagram of operation of a base station. As shown in Fig. 18, Fig. 18 is an optional schematic diagram (V) of operation of a base station according to an embodiment of the present disclosure, specifically including the following steps:
Step S1802, a first base station receives remote UE identifier indication information transmitted by a Relay UE.
Step S1804, the first base station receives/generates a Remote UE paging message.
Step S1806, the first base station calculates a PO of the Relay UE.
Step S1808, the base station transmits a Remote UE paging message at the PO of the Relay UE. For a paging message generated by an RAN, the first base station further needs to transmit a paging message to another base station in an RAN area, and the base station in the RAN area needs to transmit the PEI and the paging message.
Step S1810, the base station transmits data to the Remote UE.

### Embodiment 8

To solve the above-mentioned technical problems, a UE performs a configuration method according to an embodiment of the present disclosure, which includes: A UE that has not joined an MBS session is in an RRC-IDLE state; a UE that supports PEI receives PEI configuration information transmitted by a base station; the UE detects a PEI; the UE receives paging configuration information transmitted by a network side; the UE detects/does not detect a unicast paging message at a determined PO according to the content of the PEI; if it is determined that a UE-Identity in the paging message is a configured identifier of the UE, the UE forwards the UE-Identity to an upper layer; and if the upper layer supports a paging reason indication, the UE forwards a paging reason to the upper layer.

A UE performs a configuration method according to another embodiment of the present disclosure, which includes: A UE that has not joined an MBS session is in an RRC-INACTIVE state; a UE that supports PEI receives PEI configuration information transmitted by a base station; the UE detects a PEI; the UE receives paging configuration information transmitted by a network side; the UE detects/does not detect a unicast paging message at a determined PO according to the content of the PEI; if it is determined that a UE-Identity in the paging message is an identifier corresponding to an RRC connection suspended UE context, the UE starts an RRC connection resume process; if it is determined that the UE-Identity in the paging message is a configured identifier of the UE, the UE forwards the UE-Identity to an upper layer; if the upper layer supports a paging reason indication, the UE forwards a paging reason to the upper layer; and the UE turns to an RRC-IDLE state.

A UE performs a configuration method according to another embodiment of the present disclosure, which includes: A UE that has joined an MBS session is in an RRC-IDLE state; a UE that supports PEI receives PEI configuration information transmitted by a base station; the UE does not detect a PEI; the UE receives MBS paging configuration information transmitted by a network side; the UE detects an MBS paging message at a PO; and if it is determined that a TMGI in the paging message indicates that the UE has joined the MBS session, the UE forwards the TMGI to an upper layer.

A UE performs a configuration method according to another embodiment of the present disclosure, which includes: A UE that has joined an MBS session is in an RRC-INACTIVE state; a UE that supports PEI receives PEI configuration information transmitted by a base station; the UE does not detect a PEI; the UE receives MBS paging configuration information transmitted by a network side; the UE detects an MBS paging message at a PO; and if it is determined that a TMGI in the paging message indicates that the UE has joined the MBS session, and there is no unicast paging message required by the UE, the UE initiates an RRC connection resume process.

A UE performs a configuration method according to another embodiment of the present disclosure, which includes: A UE is used as a sidelink UE-2-NW Relay; a UE that supports PEI receives PEI configuration information transmitted by a base station; the UE detects a PEI; the UE receives paging configuration information transmitted by a network side; the UE detects/does not detect a unicast paging message at a determined PO according to the content of the PEI; if it is determined that a UE-Identity in the paging message is an identifier of a Remote UE, the UE forwards the paging message to the Remote UE through PC5.

A first base station performs a paging configuration method on a UE according to still another embodiment of the present disclosure, which includes: The first base station receives a paging message transmitted by a core network; the first base station calculates a paging occasion; the first base station configures a sub-grouping identifier of the UE; the first base station transmits the subgroup identifier; the first base station configures a subgroup/group PEI; and the first base station transmits the PEI and a paging message.

A first base station and an AMF perform a paging configuration method on a UE according to still another embodiment of the present disclosure, which includes: The first base station receives a paging message transmitted by a core network; the first base station calculates a paging occasion; the UE indicates core network-controlled subgroup configuration to the AMF; the AMF configures a sub-grouping identifier of the UE; the AMF transmits the sub-grouping identifier to the first base station and the UE; the first base station configures a subgroup/group PEI; and the first base station transmits the PEI and a paging message.

A first base station performs a paging configuration method on a UE according to still another embodiment of the present disclosure, which includes: The first base station receives downlink data transmitted by a core network; the first base station calculates a paging occasion; the first base station configures a sub-grouping identifier of the UE; the first base station transmits the subgroup identifier; the first base station configures a subgroup/group PEI; the first base station transmits the PEI; the first base station configures a paging message; and the first base station transmits the paging message.

A first base station and a second base station perform a paging configuration method on a UE according to still another embodiment of the present disclosure, which includes: The first base station receives downlink data transmitted by a core network; the first base station calculates a paging occasion; the first base station configures a sub-grouping identifier of the UE; the first base station transmits the subgroup identifier; the first base station configures a subgroup/group PEI; the first base station transmits the PEI; the first base station configures a paging message; the first base station transmits the paging message; the first base station transmits the paging message to the second base station; the second base station calculates a paging occasion; the second configures a sub-grouping identifier of the UE; the first base station transmits the subgroup identifier; the second base station configures a subgroup/group PEI; the second base station transmits the PEI; the second base station configures a paging message; the second base station transmits the paging message.

A first base station performs a paging configuration method on a UE according to still another embodiment of the present disclosure, which includes: The first base station receives a downlink data transmitted by a core network; the first base station calculates a paging occasion; the UE indicates core network-controlled subgroup configuration to an AMF; the AMF configures a sub-grouping identifier of the UE; the AMF transmits the sub-grouping identifier to the first base station and the UE; the first base station configures a subgroup/group PEI; the first base station transmits the subgroup PEI; the first base station configures a paging message; and the first base station transmits the paging message.

A first base station and a second base station perform a paging configuration method on a UE according to still another embodiment of the present disclosure, which includes: The first base station receives a downlink data transmitted by a core network; the first base station calculates a paging occasion; the UE indicates core network-controlled subgroup configuration to an AMF; the AMF configures a sub-grouping identifier of the UE; the AMF transmits the sub-grouping identifier to the first base station, the second base station, and the UE; the first base station configures a subgroup/group PEI; the first base station transmits the subgroup PEI; the first base station configures a paging message; the first base station transmits the paging message; the second base station configures a subgroup/group PEI; the second base station transmits the PEI; the second base station configures a paging message; and the second base station transmits the paging message.

A first base station performs a paging configuration method on a Relay UE according to still another embodiment of the present disclosure, which includes: The first base station receives a paging message transmitted by a core network; the first base station calculates a paging occasion; the first base station configures a sub-grouping identifier of the UE; the first base station transmits the subgroup identifier; the first base station configures a subgroup/group PEI; the first base station transmits the PEI and a paging message; and a UE that receives the paging message forwards the paging message to a Remote UE in a sidelink.

A first base station and an AMF perform a paging configuration method on a Relay UE according to still another embodiment of the present disclosure, which includes: The first base station receives a paging message transmitted by a core network; the first base station calculates a paging occasion; the Relay UE indicates core network-controlled subgroup configuration to the AMF; the AMF configures a sub-grouping identifier of the Relay UE; the AMF transmits the sub-grouping identifier to the first base station and the Relay UE; the first base station configures a subgroup/group PEI; the first base station transmits the PEI and a paging message; and the Relay UE that receives the paging message forwards the paging message in a sidelink.

A UE that performs still another embodiment of the present disclosure includes: a control part that calculates a paging occasion and determines, according to a content of a paging message, whether the content is desired information; a receiving part that receives the paging message; and a transmitting part that transmits UE-Identity information to an upper layer and transmits an RRC connection request/resume signaling to a first base station.

A UE that performs still another embodiment of the present disclosure includes: a control part that calculates a paging occasion and determines, according to a content of a paging message, whether the content is desired information; a receiving part that receives the paging message; and a transmitting part that transmits TMGI information to an upper layer and transmits an RRC connection request/resume signaling to a first base station.

A UE that performs still another embodiment of the present disclosure includes: a control part that calculates a PEI occasion and a paging occasion, determines, according to contents of a PEI and a paging message, whether the contents are desired information, and sets sub-grouping and PEI supporting indication information; a receiving part that receives a sub-grouping identifier transmitted by a first base station/second base station, receives a PEI configuration and the PEI, and receives a paging message; and a transmitting part that transmits a UE-Identity to an upper layer, transmits an RRC connection request/resume signaling to the first base station/second base station, and transmits sub-grouping and PEI supporting indication information to an AMF.

A UE that performs another embodiment of the present disclosure includes: a control part that calculates a PEI occasion and a paging occasion, determines, according to contents of a PEI and a paging message, whether the contents are desired information, and sets sub-grouping and PEI supporting indication information; a receiving part that receives a sub-grouping identifier transmitted by an AMF, receives a PEI configuration and the PEI, and receives the paging message; and a transmitting part that transmits a UE-Identity to an upper layer, transmits an RRC connection request/resume signaling to a first base station/second base station, and transmits sub-grouping and PEI supporting indication information to the AMF.

A UE that performs another embodiment of the present disclosure includes: a control part that calculates a paging occasion and determines, according to a content of a paging message, whether the content is desired information; a receiving part that receives the paging message at the paging occasion; and a transmitting part that transmits the received paging message to a target remote UE.

A UE that performs still another embodiment of the present disclosure includes: a control part that calculates a PEI occasion and a paging occasion, determines, according to contents of a PEI and a paging message, whether the contents are desired information, and sets sub-grouping and PEI supporting indication information; a receiving part that receives a sub-grouping identifier transmitted by a first base station/second base station, receives a PEI configuration and the PEI, and receives a paging message; and a transmitting part that transmits the received paging message to a remote UE and transmits sub-grouping and PEI supporting indication information to an AMF.

A UE that performs still another embodiment of the present disclosure includes: a control part that calculates a PEI occasion and a paging occasion, determines, according to contents of a PEI and a paging message, whether the contents are desired information, and sets sub-grouping and PEI supporting indication information; a receiving part that receives a sub-grouping identifier transmitted by an AMF, receives a PEI configuration and the PEI, and receives a paging message; and a transmitting part that transmits the received paging message to a Remote UE and transmits sub-grouping and PEI supporting indication information to the AMF.

A base station that configures a UE in still another embodiment of the present disclosure includes: a control part that calculates a paging occasion and sets a content of a paging message; a receiving part that receives a paging message/data transmitted by a core network, receives an RRC connection request/resume signaling transmitted by the UE; and a transmitting part that transmits the paging message at the paging occasion.

A base station that configures a UE in still another embodiment of the present disclosure includes: a control part that calculates a paging occasion and sets a content of a paging message; a receiving part that receives an MBS session activation notification transmitted by a core network and receives an RRC connection request/resume signaling transmitted by the UE; and a transmitting part that transmits the paging message at the paging occasion and transmits an RAN paging message to a base station in another RAN area.

A base station that configures a UE in still another embodiment of the present disclosure includes: a control part that calculates a PEI occasion and a paging occasion, configures paging sub-grouping, and sets contents of a PEI and a paging message; a receiving part that receives a paging message/data transmitted by a core network, receives an RRC connection request/resume signaling transmitted by the UE, and receives UE sub-grouping and PEI supporting indication information transmitted by an AMF; and a transmitting part that transmits PEl/paging sub-grouping configuration information to the UE, transmits the PEI at the PEI occasion, transmits the paging message at the paging occasion, and transmits an RAN paging message to a base station in another RAN area.

A base station that configures a UE in still another embodiment of the present disclosure includes: a control part that calculates a paging occasion and sets a content of a paging message; a receiving part that receives a paging message/data transmitted by a core network and targeted at a Remote UE and receives an RRC connection request/resume signaling transmitted by a Relay UE; and a transmitting part that transmits the paging message at the paging occasion.

A base station that configures a UE in still another embodiment of the present disclosure includes: a control part that calculates a PEI occasion and a paging occasion, sets contents of a PEI and a paging message, and configures paging sub-grouping; a receiving part that receives a paging message/data transmitted by a core network and targeted at a Remote UE, receives an RRC connection request/resume signaling transmitted by a Relay UE, and receives Relay UE sub-grouping and PEI supporting indication information transmitted by an AMF; and a transmitting part that transmits PEl/paging sub-grouping configuration information to the UE, transmits the PEI at the PEI occasion, and transmits the paging message at the paging occasion.

An AMF that configures a UE of still another embodiment of the present disclosure includes: a control part that configures a content of a paging message and paging sub-grouping; a receiving part that receives PEI and sub-grouping supporting indication information transmitted by the UE and receives an MBS session activation indication message; and transmitting part that transmits paging sub-grouping supporting information to the UE, transmits a paging sub-grouping ID configuration information to a first/second base station and the UE, transmits UE sub-grouping and PEI supporting information to the first/second base station, and transmits the paging message to the first/second base station

The first/second base station mentioned above is a 5G NR base station, a 4G LTE base station, a 3G base station, or another new generation base station that supports PEI. The above UE supports unicast paging of a core network/access network, or supports multicast paging, or supports PEI and paging sub-grouping. The UE is in an RRC-IDLE or RRC-INACTIVE state. The above AMF is a core network device that supports paging sub-grouping and PEI.

According to the descriptions in the foregoing implementations, a person skilled in the art may clearly learn that the method according to the foregoing embodiments may be implemented by relying on software and an essential commodity hardware platform or by using hardware, but the former is a better implementation in most cases. Based on such an understanding, the technical solutions of the present disclosure essentially, or the part contributing to the prior art, may be presented in the form of a software product. The computer software product is stored in a storage medium (for example, a read-only memory (ROM)/random access memory (RAM), a magnetic disk, or a compact disc) including several instructions to enable a second node device (which may be a mobile phone, a computer, a server, a network device, or the like) to perform the methods described in all the embodiments of the present disclosure.

In the above embodiments, the solutions described in the embodiments of the present disclosure relate to UEs, base stations, and AMFs which are configured for performing the above solutions and implementing the above embodiments. In an embodiment, compositions of the above UEs, base stations, and AMFs may be structures shown in the following schematic diagrams:
Fig. 22 is an optional schematic diagram of a composition of a UE according to an embodiment of the present disclosure. As shown in Fig. 22:
Referring to Fig. 22, a UE 2200 according to still another embodiment includes a control part 2210, a transmitting part 2220, and a receiving part 2230.

To perform the paging operation required by the above invention, the control part 2210 calculates a PEI occasion and a paging occasion, determines, according to contents of a received PEI and paging message, whether the contents are desired information, and sets sub-grouping and PEI supporting indication information; the receiving part 2230 receives a sub-grouping identifier transmitted by an AMF/base station, receives a PEI configuration and the PEI, and receives the paging message; and the transmitting part 2220 transmits a UE-Identity/TMGI to an upper layer, transmits an RRC connection request/resume signaling to the base station, transmits sub-grouping and PEI supporting indication information to the AMF, and transmits a content corresponding to the paging message to a remote UE.

Fig. 23 is an optional schematic diagram of a composition of a base station according to an embodiment of the present disclosure. As shown in Fig. 23:
Referring to Fig. 23, a base station 2300 according to still another embodiment includes a control part 2310, a transmitting part 2320, and a receiving part 2330.

To perform the paging operation required by the above invention, the control part 2310 calculates a PEI occasion and a paging occasion, configures a PEI-O position and a paging sub-grouping ID, and sets contents of a PEI and a paging message; the receiving part 2330 receives a paging message/data transmitted by a core network, receives an RRC connection request/resume signaling transmitted by a UE, receives UE sub-grouping and PEI supporting indication information transmitted by an AMF, and receives an MBS session activation indication information; and the transmitting part 2320 transmits PEI and paging sub-grouping configuration information to the UE, transmits the PEI at the PEI occasion, transmits the paging message at the paging occasion, and transmits, for a paging message generated by an RAN, the RAN paging message to a base station in another RAN area.

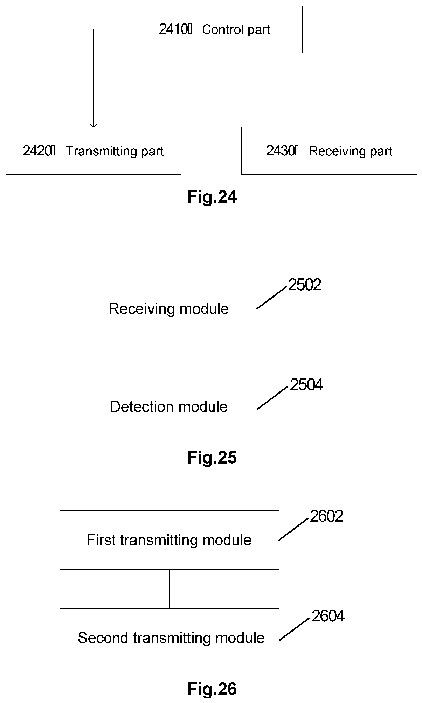

Fig. 24 is an optional schematic diagram of a composition of an AMF according to an embodiment of the present disclosure. As shown in Fig. 24:
Referring to Fig. 24, an AMF 2400 according to still another embodiment includes a control part 2410, a transmitting part 2420, and a receiving part 2430.

To perform the paging operation required by the above invention, the control part 2410 configures a content of a paging message and paging sub-grouping; the receiving part 2430 receives PEI and sub-grouping supporting indication information transmitted by a UE and receives an MBS session activation indication message; and the transmitting part 2420 transmits PEI and paging sub-grouping supporting information to the UE, transmits paging sub-grouping ID configuration information to a base station and UE in a tracking area, transmits the sub-grouping and PEI supporting information to the base station in the tracking area, transmits the paging message to the base station in the tracking area, and transmits the MBS session activation indication message to the base station.

This embodiment further provides an optional information receiving apparatus. The apparatus is configured for implementing the above embodiments and preferred implementations. Those contents that have been described will not be elaborated. As used below, the term "module" can be a combination of software and/or hardware that implements a predetermined function. Although the apparatus described in the following embodiments is preferably implemented in software, the implementation of hardware or a combination of software and hardware is also possible and envisioned.

Fig. 25 is a structural block diagram of an optional information receiving apparatus according to an embodiment of the present disclosure. As shown in Fig. 25, the apparatus includes:
a receiving module 2502, configured for: receiving sub-grouping configuration information and PEI configuration information by means of a system broadcast message, wherein a UE that has joined an MBS session does not detect a PEI, and detects a paging message at a paging occasion, and a UE that has not joined the MBS session detects a PEI at a PEI occasion according to the sub-grouping configuration information and the PEI configuration information; and
a detection module 2504, configured for: if the PEI configuration information indicates that a paging message of sub-grouping to which the UE belongs exists, detecting the paging message at the paging occasion.

According to the above apparatus, a UE in an RRC_UNCONNECTED state receives sub-grouping configuration information and PEI configuration information by means of a system broadcast message, wherein a UE that has joined an MBS session does not detect a PEI, and detects a paging message at a paging occasion; and a UE that has not joined the MBS session detects a PEI at a PEI occasion according to the sub-grouping configuration information and the PEI configuration information; and if the PEI configuration information indicates that a paging message of sub-grouping to which the UE belongs exists, the UE detects the paging message at the paging occasion, thereby solving the problems of how a UE receives sub-grouping configuration information and PEI configuration information during transmission of a PEI in the related technology and how UEs that have joined and not joined a MBS session detect a PEI. Effects of reducing a load of an MBS paging signaling and improving the MBS communication reliability and the network running performance are achieved.

In an embodiment, the above receiving module 2502 is further configured for determining an RRC_UNCONNECTED state, including at least one of the following: The UE that has not joined the MBS session is in an RRC_IDLE state; the UE that has not joined the MBS session is in an RRC_INACTIVE state; the UE that has joined the MBS session is in an RRC_IDLE state; and the UE that has joined the MBS session is in an RRC_INACTIVE state.

In an embodiment, the above receiving module 2502 is further configured for determining that the UE that has not joined the MBS session is used as a repeater device of a sidelink UE and that the UE that has joined the MBS session is used as a repeater device of the sidelink UE.

In an embodiment, the sub-grouping configuration information above at least includes one of the following: only supporting core network-controlled sub-grouping, only supporting UE identifier-based sub-grouping, and supporting both core network-controlled sub-grouping and UE identifier-based sub-grouping.

In an embodiment, the detection module 2504 is further configured for enabling a UE that supports PEI to support at least UE identifier-based sub-grouping.

In an embodiment, for the supporting core network-controlled sub-grouping, the detection module 2504 is further configured for: indicating the core network-controlled sub-grouping supported by the UE to an AMF through NAS signaling, and receiving a sub-grouping identifier configured by the AMF.

In an embodiment, for the supporting UE identifier-based sub-grouping, the receiving module 2502 is further configured for: receiving the number of sub-groupings indicated by a base station through a system message, wherein the UE identifier-based sub-grouping identifier is determined by the base station and the UE according to a UE identifier and the number of sub-groupings.

In an embodiment, the PEI configuration information includes: transmitting time and frequency of the PEI; the PEI indicates whether sub-grouping corresponding to the UE includes a paging message; and the paging message includes: a unicast paging message and MBS paging message.

In an embodiment, the receiving module 2502 is further configured for: in a case of determining that the UE that has not joined the MBS session is in the RRC_IDLE state, detecting the PEI according to the received PEI configuration information, and determining, according to the PEI, whether the UE detects a unicast paging message at a paging occasion.

In an embodiment, the receiving module 2502 is further configured for: in a case of determining that the UE detects a unicast paging message at a paging occasion, determining whether a UE identifier in the unicast paging message is an identifier configured by an upper layer of the UE; and if the UE identifier is the identifier configured by the upper layer of the UE, forwarding the UE identifier to the upper layer, wherein in a case that the upper layer supports a paging reason indication, a paging reason corresponding to the unicast paging message is forwarded to the upper layer.

In an embodiment, the receiving module 2502 is further configured for: in a case of determining that the UE that has not joined the MBS session is in the RRC_INACTIVE state, detecting the PEI according to the received PEI configuration information, so as to determine whether the UE detects a unicast paging message at a paging occasion.

In an embodiment, the receiving module 2502 is further configured for: in a case of determining that the UE detects a unicast paging message at a paging occasion, determining whether a UE identifier in the unicast paging message is an identifier corresponding to an RRC connection suspended UE context of the RRC_INACTIVE UE; and if the UE identifier in the unicast paging message is an identifier corresponding to an RRC connection suspended UE context of the RRC_INACTIVE UE, starting an RRC connection resume process.

In an embodiment, if the UE identifier is the identifier configured by the upper layer of the UE, the receiving module 2502 is further configured for: forwarding the UE identifier to the upper layer, wherein in a case that the upper layer supports a paging reason indication, a paging reason corresponding to the unicast paging message is forwarded to the upper layer.

In an embodiment, the detection module 2504 is further configured for: in a case of determining that the UE that has joined the MBS session is in the RRC_IDLE state, detecting the paging message at the paging occasion; and if it is determined that a TMGI in the paging message is an identifier of the MBS session that the UE has joined, forwarding the TMGI to the upper layer.

In an embodiment, the detection module 2504 is further configured for: in a case of determining that the UE that has joined the MBS session is in the RRC_INACTIVE state, detecting the paging message at the paging occasion; and if a TMGI in the paging message is an identifier of the MBS session that the UE has joined, and the paging message does not include the identifier configured by the upper layer of the UE, initiating, by the UE, an RRC connection resume process.

In an embodiment, the receiving module 2502 is further configured for: in a case of determining that the UE is used as a sidelink relay device, receiving the paging message according to the PEI; and if it is determined that a user identifier in the paging message is an identifier of a remote UE, forwarding the paging message to the remote UE through the UE.

Fig. 26 is a structural block diagram of an optional information transmitting apparatus according to an embodiment of the present disclosure. As shown in Fig. 26, the apparatus includes:
a first transmitting module 2602 configured for transmitting PEI configuration information and sub-grouping configuration information; and
a second transmitting module 2604, configured for: transmitting a PEI at a PEI occasion, and transmitting a paging message at a paging occasion.

According to the above apparatus, a first base station transmits PEI configuration information and sub-grouping configuration information, and the first base station transmits a PEI at a PEI occasion and transmits a paging message at a paging occasion. By the adoption of the above solution, the problems of how a UE receives sub-grouping configuration information and PEI configuration information during transmission of a PEI in the related technology and how UEs that have joined and not joined a MBS session detect a PEI are solved. Effects of reducing a load of an MBS paging signaling and improving the MBS communication reliability and the network running performance are achieved.

In an embodiment, the first transmitting module 2602 is further configured for: configuring, by the first base station, a sub-grouping identifier of a UE, and transmitting the subgroup identifier.

In an embodiment, the first transmitting module 2602 is further configured for configuring, by the first base station, a subgroup and/or the PEI.

In an embodiment, the first transmitting module 2602 is further configured for: transmitting a core network-controlled subgroup configuration to an AMF through the UE to instruct the AMF to configure the sub-grouping identifier of the UE; and receiving the sub-grouping identifier transmitted by the AMF.

In an embodiment, the second transmitting module 2604 is further configured for: in a case that the first base station calculates a paging occasion according to downlink data, configuring, by the first base station, a paging message and transmitting the paging message.

In an embodiment, the second transmitting module 2604 is further configured for: transmitting, by the first base station, the paging message to a second base station to instruct the second base station to calculate a paging occasion according to the paging message, and configuring, by the second base station, the sub-grouping identifier of the UE.

It should be noted that the above modules can be implemented through software or hardware. For the latter, the various modules can be implemented in the following ways, but not limited to: The above modules are all located in the same processor; or, the aforementioned modules can be located in different processors in the form of any combination.

**The** embodiments of the present disclosure further provide a computer-readable storage medium, having a computer program stored therein. **The** computer program is configured for, when run, executing the steps in any one of the method embodiments.

In an embodiment, in this embodiment, the above storage medium may be configured for storing a computer program used for executing the following steps:
S1: A UE in an RRC_UNCONNECTED state receives sub-grouping configuration information and PEI configuration information by means of a system broadcast message, wherein a UE that has joined an MBS session does not detect a PEI, and detects a paging message at a paging occasion, and a UE that has not joined the MBS session detects a PEI at a PEI occasion according to the sub-grouping configuration information and the PEI configuration information.
S2: If the PEI configuration information indicates that a paging message of sub-grouping to which the UE belongs exists, the UE detects the paging message at the paging occasion.

In an embodiment, the above storage medium may be further configured for storing a computer program used for executing the following steps:
S1: A first base station transmits PEI configuration information and sub-grouping configuration information.
S2: The first base station transmits a PEI at a PEI occasion and transmits a paging message at a paging occasion.

In an exemplary embodiment, the computer-readable storage medium mentioned above can include but not limited to: various media that can store computer programs, such as a USB flash drive, a Read-Only Memory (ROM), a Random Access Memory (RAM), a mobile hard disk drive, a magnetic disk, and an optical disk.

The specific examples in this embodiment can refer to the examples described in the above embodiments and exemplary implementations, and will not be elaborated in this embodiment.

The embodiments of the present disclosure further provide an electronic apparatus, including a memory and/or a processor. The memory stores a computer program. The processor is configured for running the computer program to execute the steps in any one of the method embodiments.

The embodiments of the present disclosure further provide an electronic apparatus, including a memory and/or a processor. The memory stores a computer program. The processor is configured for running the computer program to execute the steps in any one of the method embodiments.

In an embodiment, in this embodiment, the above processor may be configured for executing the following steps through the computer program:
S1: A UE in an RRC_UNCONNECTED state receives sub-grouping configuration information and PEI configuration information by means of a system broadcast message, wherein a UE that has joined an MBS session does not detect a PEI, and detects a paging message at a paging occasion, and a UE that has not joined the MBS session detects a PEI at a PEI occasion according to the sub-grouping configuration information and the PEI configuration information.
S2: If the PEI configuration information indicates that a paging message of sub-grouping to which the UE belongs exists, the UE detects the paging message at the paging occasion.

In an embodiment, in this embodiment, the above processor may be further configured for executing the following steps through the computer program:
S1: A first base station transmits PEI configuration information and sub-grouping configuration information.
S2: The first base station transmits a PEI at a PEI occasion and transmits a paging message at a paging occasion.

Obviously, those skilled in the art should understand that the various modules or steps of the present disclosure can be implemented using a universal computing apparatus, which can be concentrated on a single computing apparatus or distributed on a network composed of a plurality of computing apparatuses. The modules or steps can be implemented using program codes that can be executed by a computing apparatus, so that the modules or steps can be stored in a storage apparatus for execution by the computing apparatus. Furthermore, in some cases, the steps shown or described can be executed in an order different from those here, or the steps can be separately made into various integrated circuit modules, or a plurality of modules or steps among the modules or steps can be made into single integrated circuit modules for implementation. In this way, the present disclosure is not limited to any specific combinations of hardware and software.

The above descriptions are only preferred embodiments of the present disclosure, and are not intended to limit the present disclosure. For those skilled in the art, the present disclosure may have various modifications and changes. Any modification, equivalent replacement, and improvement made within the principle of the present disclosure shall fall within the protection scope of the present disclosure.

## Claims

1. An information receiving method, comprising:
receiving, by a user equipment, UE, in a RRC_UNCONNECTED state, sub-grouping configuration information and paging early indication, PEI, configuration information by means of a system broadcast message, wherein a UE that has joined a multicast broadcast service, MBS, session does not detect a PEI, and detects a paging message at a paging occasion, and a UE that has not joined the MBS session detects a PEI at a PEI occasion according to the sub-grouping configuration information and the PEI configuration information; and
when the PEI configuration information indicates that a paging message of sub-grouping to which the UE belongs exists, detecting, by the UE, the paging message at the paging occasion.

2. The information receiving method according to claim 1, wherein the RRC_UNCONNECTED state at least comprises at least one of the following:
the UE that has not joined the MBS session is in an RRC_IDLE state;
the UE that has not joined the MBS session is in an RRC_INACTIVE state;
the UE that has joined the MBS session is in an RRC_IDLE state; and
the UE that has joined the MBS session is in an RRC_INACTIVE state.

3. The information receiving method according to claim 1, wherein the method further comprises:
using the UE that has not joined the MBS session as a repeater device of a sidelink UE, and
using the UE that has joined the MBS session as a repeater device of the sidelink UE.

4. The information receiving method according to claim 1, wherein the sub-grouping configuration information at least comprises one of the following: only supporting core network-controlled sub-grouping, only supporting UE identifier-based sub-grouping, and supporting both core network-controlled sub-grouping and UE identifier-based sub-grouping.

5. The information receiving method according to claim 1, wherein the method further comprises: at least supporting, by a UE that supports PEI, UE identifier-based sub-grouping.

6. The information receiving method according to claim 4, wherein for the only supporting core network-controlled sub-grouping, the method further comprises: indicating, through a non-access stratum, NAS, signaling, the core network-controlled sub-grouping supported by the UE to an access and mobility management function, AMF, and receiving a sub-grouping identifier configured by the AMF.

7. The information receiving method according to claim 4, wherein for the only supporting UE identifier-based sub-grouping, the method further comprises: receiving the number of sub-groupings indicated by a base station through a system message, wherein the UE identifier-based sub-grouping identifier is determined by the base station and the UE according to a UE identifier and the number of sub-groupings.

8. The information receiving method according to claim 1, wherein the PEI configuration information comprises: transmitting time and frequency of the PEI; the PEI indicates whether sub-grouping corresponding to the UE comprises a paging message; and the paging message comprises: a unicast paging message and MBS paging message.

9. The information receiving method according to claim 2, wherein the method further comprises:
in a case of determining that the UE that has not joined the MBS session is in the RRC_IDLE state, detecting the PEI according to the received PEI configuration information, and determining, according to the detected PEI, whether the UE detects a unicast paging message at a paging occasion.

10. The information receiving method according to claim 9, wherein the method further comprises:
in a case of determining that the UE detects a unicast paging message at a paging occasion, determining whether a UE identifier in the unicast paging message is an identifier configured by an upper layer of the UE; and
when the UE identifier is the identifier configured by the upper layer of the UE, forwarding the UE identifier to the upper layer, wherein in a case that the upper layer supports a paging reason indication, a paging reason corresponding to the unicast paging message is forwarded to the upper layer.

11. The information receiving method according to claim 2, wherein the method further comprises:
in a case of determining that the UE that has not joined the MBS session is in the RRC_INACTIVE state, detecting the PEI according to the received PEI configuration information, so as to determine whether the UE detects a unicast paging message at a paging occasion.

12. The information receiving method according to claim 11, wherein the method further comprises:
in a case of determining that the UE detects a unicast paging message at a paging occasion, determining whether a UE identifier in the unicast paging message is an identifier corresponding to an RRC connection suspended UE context of the RRC_INACTIVE UE; and
when the UE identifier in the unicast paging message is the identifier corresponding to the RRC connection suspended UE context of the RRC_INACTIVE UE, starting an RRC connection resume process.

13. The information receiving method according to claim 12, wherein if the UE identifier is the identifier configured by the upper layer of the UE, the method further comprises:
forwarding the UE identifier to the upper layer, wherein in a case that the upper layer supports a paging reason indication, a paging reason corresponding to the unicast paging message is forwarded to the upper layer.

14. The information receiving method according to claim 2, wherein the method further comprises:
in a case of determining that the UE that has joined the MBS session is in the RRC_IDLE state, detecting the paging message at the paging occasion; and
when it is determined that a temporary mobile group identity, TMGI, in the paging message is an identifier of the MBS session that the UE has joined, forwarding the TMGI to the upper layer.

15. The information receiving method according to claim 2, wherein the method further comprises:
in a case of determining that the UE that has joined the MBS session is in the RRC_INACTIVE state, detecting the paging message at the paging occasion; and
when a TMGI in the paging message is an identifier of the MBS session that the UE has joined, and the paging message does not comprise the identifier configured by the upper layer of the UE, initiating, by the UE, an RRC connection resume process.

16. The information receiving method according to claim 2, wherein the method further comprises:
in a case of determining that the UE is used as a sidelink relay device, receiving the paging message according to the PEI; and
when it is determined that a user identifier in the paging message is an identifier of a remote UE, forwarding the paging message to the remote UE through the UE.

17. An information transmitting method, comprising:
transmitting, by a first base station, PEI configuration information and sub-grouping configuration information; and
transmitting, by the first base station, a PEI at a PEI occasion, and transmitting a paging message at a paging occasion.

18. The information transmitting method according to claim 17, wherein the method further comprises:
configuring, by the first base station, a sub-grouping identifier of a UE, and transmitting the subgroup identifier.

19. The information transmitting method according to claim 17, comprising:
configuring, by the first base station, a subgroup and/or the PEI.

20. The information transmitting method according to claim 17, wherein the method further comprises:
transmitting a core network-controlled subgroup configuration to an AMF through the UE to instruct the AMF to configure the sub-grouping identifier of the UE; and
receiving the sub-grouping identifier transmitted by the AMF.

21. The information transmitting method according to claim 17, wherein in a case that the first base station calculates a paging occasion according to downlink data, the method further comprises:
configuring, by the first base station, a paging message, and transmitting the paging message.

22. The information transmitting method according to claim 21, wherein the method further comprises:
transmitting, by the first base station, the paging message to a second base station to instruct the second base station to calculate a paging occasion according to the paging message, and configuring, by the second base station, the sub-grouping identifier of the UE.

23. An information receiving apparatus, applied to a UE in an RRC_UNCONNECTED state, wherein the information receiving apparatus comprises:
a receiving module, configured to receive sub-grouping configuration information and PEI configuration information by means of a system broadcast message, wherein a UE that has joined an MBS session does not detect a PEI, and detects a paging message at a paging occasion, and a UE that has not joined the MBS session detects a PEI at a PEI occasion according to the sub-grouping configuration information and the PEI configuration information; and
a detection module, configured to, when the PEI configuration information indicates that a paging message of sub-grouping to which the UE belongs exists, detect the paging message at the paging occasion.

24. An information transmitting apparatus, comprising:
a first transmitting module, configured to transmit PEI configuration information and sub-grouping configuration information; and
a second transmitting module, configured to transmit a PEI at a PEI occasion, and transmitting a paging message at a paging occasion.

25. A computer-readable storage medium, having a computer program stored therein, wherein the computer program is configured to, when executed by a processor, cause the processor to perform the method according to any one of claims 1 to 16 or the method according to any one of claims 17 to 22.

26. An electronic apparatus, comprising a memory and a processor, wherein the memory has a computer program stored therein, and the processor is configured to execute the computer program to perform the method according to any one of claims 1 to 16 or the method according to any one of claims 17 to 22.
